# EUROPÄISCHE PATENTANMELDUNG

(11) **EP 1 484 681 A2**
(43) Veröffentlichungstag der Anmeldung: **08.12.2004**
(21) Anmeldenummer: 04090129.0
(22) Anmeldetag: 02.04.2004
(51) Int. Cl.: G06F 11/16

(54) **Rechnersystem mit einem Mastersystem, einem Slavesystem, und einer Datensychronisierungseinrichtung**

(30) Priorität: 29.04.2003 DE 10319903
(71) Anmelder: SIEMENS AKTIENGESELLSCHAFT, 80333 München (DE)
(72) Erfinder: Kendelbacher, Detlef, 13129 Berlin (DE); Pliquett, Volker, 12621 Berlin-Kaulsdorf (DE); Stein, Fabrice, 12621 Berlin (DE)

(57) **Zusammenfassung**

Die Erfindung betrifft eine Rechneranordnung mit einem eigensicheren, als Mastersystem (A) konfigurierten 2v2 Rechnersystem und einem weiteren eigensicheren, mit dem Mastersystem (A) gekoppelten, als Slavesystem (B) konfigurierten, 2v2 Rechnersystem. Zur Erhöhung der Ausfalltoleranz ist vorgesehen, dass zwischen Master- und Slavesystem (A und B) eine erste Verbindung zwecks Synchronisierung der Eingabedaten vorgesehen ist, mittels der durch transaktionsorientierte Datenübertragung die Übereinstimmung der Ausgaben beider parallel arbeitender 2v2 Rechnersysteme sicherstellbar ist - Inputsynchronisierung - und dass eine zweite Verbindung zwecks Synchronisierung der Ausgabedaten vorgesehen ist, mittels der das Mastersystem (A) die Ausgaben des Slavesystems (B) in sicherer Art und Weise abschalten kann - Outputsynchronisierung.

## Beschreibung

Für sicherheitsrelevante Anwendungen, z. B. in der Eisenbahnsicherungstechnik, werden oft Rechnersysteme mit speziellen fail save Architekturen eingesetzt. Für den Aufbau dieser sicheren Rechner gibt es verschiedene Möglichkeiten. Gebräuchlich ist eine Anordnung, bestehend aus zwei Rechnerkanälen - Replika - einem Eingabeverteiler und einem Ausgabevergleicher - Voter. Auf beiden Replika eines derart aufgebauten 2v2 Rechners laufen gleiche Software-Programme ab, die im fehlerfreien Fall übereinstimmende Ergebnisse berechnen. Durch den nachgeschalteten Voter wird die Übereinstimmung der Ausgaben der Replika bewertet. Sind die Ergebnisse identisch, erfolgt eine Freigabe der Stellenergie an den zu steuernden Prozess, indem der Voter die Ausgabe einer Replika freigibt, während die Ausgabe der anderen Replika gesperrt ist. Die Freigabe oder Sperrung von Stellenergie beeinflusst den Rechner hinsichtlich seines Vermögens, auf den zu steuernden Prozess einzuwirken. Bei abweichenden Ausgabeergebnissen beider Replika leitet der Voter eine Sicherheitsreaktion ein, die normalerweise in der Sperrung der Ausgabe an den zu steuernden Prozess und der Abschaltung der beteiligten Replika besteht. Der Voter besteht bei diesen 2v2 Rechnern aus einer speziellen eigensicheren Hardware. Derart aufgebaute Rechner werden als hardwaresynchronisierte eigensichere 2v2 Rechner bezeichnet.

Die beiden parallel laufenden Replika und der Voter eines 2v2 Rechners bewirken durch die Fehleroffenbarung eine Erhöhung der Sicherheit, während die Verfügbarkeit des Rechnersystems dadurch nicht gesteigert wird. In vielen sicherheitskritischen Anwendungen ist aber neben einem definierten Sicherheitsniveau, Safety Integrity Level - SIL, auch eine hohe Zuverlässigkeit der Anlage gefordert. Oft erfordert das gegebene Zuverlässigkeitsziel weitere Maßnahmen, um bei Ausfällen von Rechnerkomponenten die Funktionsfähigkeit des sicheren Rechnersystems aufrecht zu erhalten. Eine Möglichkeit besteht in der Einführung einer zusätzlichen Replika, wodurch ein 2v3 Rechnersystem entsteht.

Eine andere Möglichkeit bietet sich durch die Kopplung zweier 2v2 Rechnersysteme zu einem redundanten 2*2v2 Rechnersystem.

Der Erfindung liegt die Aufgabe zugrunde, eine Rechneranordnung gattungsgemäßer Art anzugeben, die sich durch Sicherheit und Ausfalltoleranz auszeichnet.

Erfindungsgemäß wird die Aufgabe durch die kennzeichnenden Merkmales des Anspruchs 1 gelöst. Auf diese Weise ist es möglich, einen sicheren ausfalltoleranten 2*2v2 Rechnerverbund auf der Basis zweier lose synchronisierter sicherer 2v2 Rechnersysteme aufzubauen, wobei ein 2v2 Rechnersystem als Mastersystem und das andere 2v2 Rechnersystem als Slavesystem fungiert. Ein Vorteil dieser Rechneranordnung liegt darin, dass für die Redundanzkoordination der beiden 2v2 Rechnersysteme im Wesentlichen nur Softwareaufwand erforderlich ist. Durch geeignetes Design können die Softwareerweiterungen außerhalb der Applikation, also als Teil des Betriebssystems, realisiert werden und als identische Programme auf allen beteiligten Replika ablaufen.
Die Sicherheit des redundanten 2*2v2 Rechnersystems wird mittels der vorhandenen eigensicheren Hardwarekomponenten der 2v2 Rechnersysteme und zusätzlicher Synchronisierungsfunktionen erreicht. Der zusätzliche Hardwareaufwand beschränkt sich auf Kabel und Schnittstellen zur Verbindung der beiden 2v2 Rechnersysteme, sowie auf Erweiterungen in der Voterlogik der beiden 2v2 Rechnersysteme.

Die Zusammenschaltung zweier parallel arbeitender eigensicherer 2v2 Rechnersysteme mit identischer Software zu einem redundanten eigensicheren 2*2v2 Rechnerverbund erfordert eine Synchronisierung der Arbeit der beiden 2v2 Rechnersysteme. Dazu müssen zwei wesentliche Aufgaben gelöst werden:
1. Die Eingabedaten der beiden 2v2 Rechnersysteme müssen derart synchronisiert werden, dass die Berechnung der Ausgaben an den zu steuernden Prozess bei beiden 2v2 Rechnersystemen zu identischen Ergebnissen führt - Inputsynchronisierung.
2. Die votergesteuerte Ausgabe der Stellenergie an den zu steuernden Prozess darf nur durch ein funktionsfähiges 2v2 Rechnersystem erfolgen - Outputsynchronisierung.
Zur Erfüllung dieser Aufgaben werden die beiden 2v2 Rechnersysteme jeweils zwecks Inputsynchronisierung und Outputsynchronisierung miteinander gekoppelt. Die Kopplung der beiden 2v2 Rechnersysteme erfolgt über Kabel. Für die Inputsynchronisierung kann beispielsweise ein serielles Kabel verwendet werden, während für die Outputsynchronisierung beispielsweise eine zweikanalige Leitung geeignet ist. Für die Funktionen der Inputsynchronisierung sind Softwareerweiterungen notwendig, die beispielsweise als identische Middleware in den vier Replika ablaufen können. Zur Outputsynchronisierung ist eine Erweiterung der bestehenden Logik der üblicherweise aus programmierbarer Hardware aufgebauten Voter der 2v2 Rechnersysteme notwendig. Die Erweiterungen in den Votern sind asymmetrisch, d. h. durch Zuordnung des spezifisch erweiterten Voters zu einem 2v2 Rechnersystem wird bestimmt, welches 2v2 Rechnersystem im 2*2v2 Rechnerverbund zum Mastersystem und welches zum Slavesystem wird.

Im 2*2v2 Rechnerverbund existieren zwei unterschiedliche Verfahren zur Synchronisierung der Eingabedaten. Die interne Inputsynchronisierung ist Bestandteil eines sicheren 2v2 Rechnersystems und wird mittels des Eingabeverteilers - Hardware - realisiert. Sie dient der Synchronisierung der Eingabedaten zwischen den beiden Replika eines 2v2 Rechnersystems. Die externe Inputsynchronisierung ist notwendig zur Erweiterung der 2v2 Rechnersysteme zum 2*2v2 Rechnerverbund und sorgt für Verteilung und Abgleich der Eingabedaten zwischen den 2v2 Rechnersystemen nach ihrem Einlesen und ggf. Vorverarbeiten innerhalb der 2v2 Rechnersysteme. Zur Durchführung der externen Inputsynchronisierung besitzt jede Replika der beteiligten 2v2 Rechnersysteme eine Software, die periodisch innerhalb eines Transaktionsintervalls die Datenübertragung zwischen den beiden 2v2 Rechnersystemen durchführt und abhängig von Art und Bedeutung der Eingabedaten ein gemeinsames Zustandsabbild der Daten in den einzelnen 2v2 Rechnersystem herstellt. Die Software für die externe Inputsynchronisierung kann auf allen Replika des 2*2v2 Rechnerverbundes identisch sein. Das erzeugte gemeinsame Zustandsabbild ist Grundlage für die Berechnung der übereinstimmenden Ergebnisse beider 2v2 Rechner.

Die Outputsynchronisierung dient der Koordination der beiden sicheren 2v2 Rechnersysteme bezüglich der Freigabe der Stellenergie an den zu steuernden Prozess. Für diese Funktion wird ein 2v2 Rechnersystem als Mastersystem und das andere als Slavesystem konfiguriert. Master- und Slavesystem arbeiten im fehlerfreien Fall parallel redundant und liefern gleiche Ergebnisse. Im fehlerfreien Fall erfolgt die Freigabe der Stellenergie an den zu steuernden Prozess durch den Voter des Mastersystems, während das Slavesystem im hot-stand-by Modus mitläuft. Dieses wird erreicht, indem der Voter des Mastersystems mittels der Verbindung zum Voter des Slavesystems den Voter des Slavesystems für die Ausgabe der Stellenergie sperrt. Tritt im Mastersystem ein Fehler auf, erfolgt durch den Voter des Mastersystems die Sperrung der Ausgabe von Stellenergie des Mastersystems. In diesem Fall wird vom Voter des Mastersystems der Voter des Slavessystems entsperrt. Bei fehlerfreier Funktion des Slavesystems übernimmt das Slavesystem die Ausgabe der Stellenergie an den zu steuernden Prozess. Übertragungsfehler bei der externen Inputsynchronisierung und bei der Outputsynchronisierung führen bei sonst fehlerfreiem Rechnerverbund zum Abschalten des redundanten Slavesystems und zur Fortsetzung der Stellenergieausgabe durch das Mastersystem.

Insgesamt ergeben sich folgende Vorteile der Rechneranordnung:
1. Mit vorhandenen 2v2 Rechnersystemen kann ohne wesentliche Hardwareerweiterung ein hochverfügbarer sicherer 2*2v2 Rechnerverbund aufgebaut werden.
2. Die 2v2 Rechnersysteme im 2*2v2 Rechnerverbund können räumlich getrennt untergebracht werden - local diversity
3. Die zusätzlich notwendigen Funktionen der externen Inputsynchronisierung können außerhalb der Applikationssoftware realisiert werden - Middleware -. Das transaktionsorientierte Übertragungsprotokoll ist einfach und erfordert keine Hardwareentwicklung.
4. Die Verarbeitung zeitkritischer Eingaben kann durch geeignetes Applikationsdesign von der zeitaufwendigeren externen Inputsynchronisation entkoppelt werden. Damit können Performanceprobleme vermieden werden.
5. Die zusätzlich notwendigen Funktionen der Outputsynchronisierung können durch Erweiterung der bestehenden Voterlogik realisiert werden.
6. Für die Outputsynchronisierung muss zwischen den Votern des Master- und Slavesystems nur ein Informations-Bit übertragen werden.
7. Die Konfiguration von Master und Slave erfolgt durch die Voterzuordnung - Mastervoter / Slavevoter. Die Software kann für alle vier Replika identisch bleiben.
8. Das 2*2v2 System kann sowohl Ausfälle eines 2v2 Rechners, als auch Ausfälle im Bereich der Input- und Outputsynchronisation unterbrechungsfrei tolerieren.
9. Der Wiederanlauf eines 2v2 Rechnersystems im 2*2v2 Rechnerverband inklusive Resynchronisierung auf den Zustand des anderen 2v2 Rechnersystems ist während der Systemlaufzeit möglich.

Weitere Besonderheiten ergeben sich aus den Unteransprüchen bzw. werden nachfolgend anhand figürlicher Darstellungen näher erläutert. Es zeigen:
- Figur 1: eine Prinzipdarstellung eines 2*2v2 Rechnerverbundes,
- Figur 2: ein Schema eines Transaktionsprotokolls,
- Figur 3: Informationsflüsse im 2*2v2 Rechnerverbund,
- Figur 4: ein Zustandsmodell einer Voter Mastersystems und
- Figur 5: ein Zustandsmodell eines Voter Slavesystems.

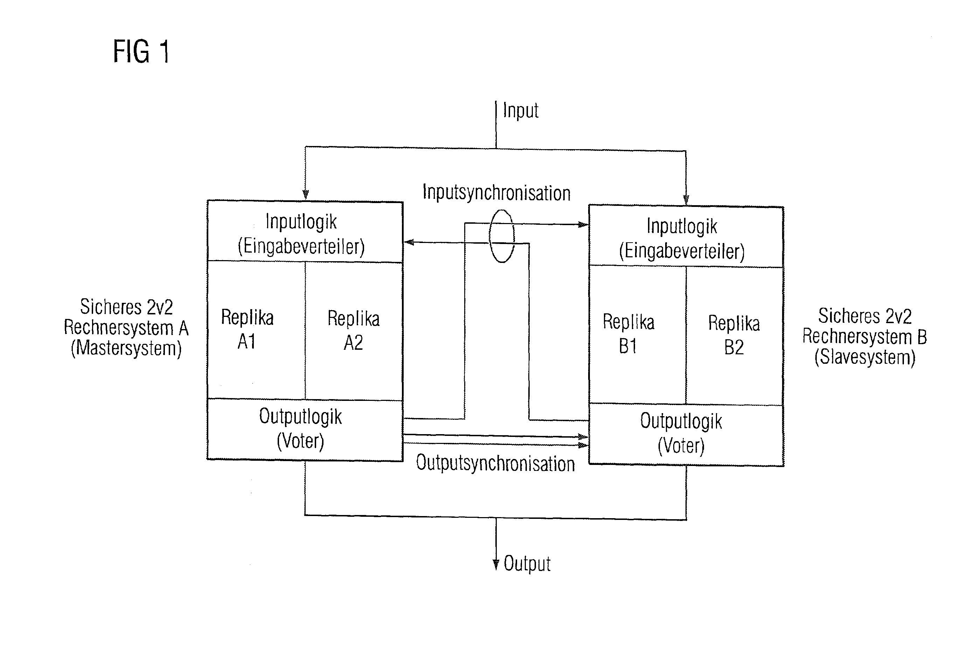

Für die Anwendung des Verfahrens zur Redundanzkoordination sicherer Mehrrechnersysteme gemäß Figur 1 müssen folgende Voraussetzungen erfüllt sein:
1. Die verwendeten 2v2 Rechnersysteme sind eigensicher.
2. Die Ausgabe eines 2v2 Rechnersystems ist gevotet, d. h. die Stellenergieausgabe ist sicher abschaltbar.
3. Die verwendeten 2v2 Rechner können zwecks externer Inputsynchronisierung miteinander gekoppelt werden.
4. Die durch externe Inputsynchronisierung bedingte zeitliche Verzögerung in der Datenverarbeitung der 2v2 Rechnersysteme ist tolerierbar, d. h. Performanceverlust ist in definierten Grenzen akzeptabel.
5. Die Voter der verwendeten 2v2 Rechnersysteme können zwecks Outputsynchronisierung miteinander derart gekoppelt werden, dass eine sichere Sperrung der Stellenergieausgabe im Slavesystem durch den Voter des Mastersystems möglich ist.

Im 2*2v2 Rechnerverbund sind beide 2v2 Rechnersysteme parallel mit den Eingabeschnittstellen verbunden und werden mit gleichen Eingabedaten versorgt. Die Programmabarbeitung zweier parellel arbeitenden 2v2 Rechnersysteme driftet jedoch zunehmend auseinander. Das zeitliche Auseinanderlaufen der 2v2 Rechnersysteme führt dazu, dass Eingabedaten zu unterschiedlichen Zeitpunkten eingelesen werden. Das kann besonders bei zeitlich nur kurz anliegenden Eingabesignalen zu verschiedenen Datenzuständen in den 2v2 Rechnersystemen führen. Abweichungen bei den Eingabedaten der 2v2 Rechnerssysteme würden zu unterschiedlichen Ergebnissen bei der Ausgabe führen. Deswegen ist der Abgleich der Eingabedaten eine in der Realtime-Verarbeitung begründete Funktion für Mehrrechnersysteme. Der Abgleich der Eingabedaten innerhalb eines 2v2 Rechnersystems wird durch die vorhandenen Eingabeverteiler geleistet - interne Synchronisierung. Für den Abgleich der Eingabedaten zwischen den 2v2 Rechnersystemen wird zusätzlich die externe Inputsynchronisierung benötigt.

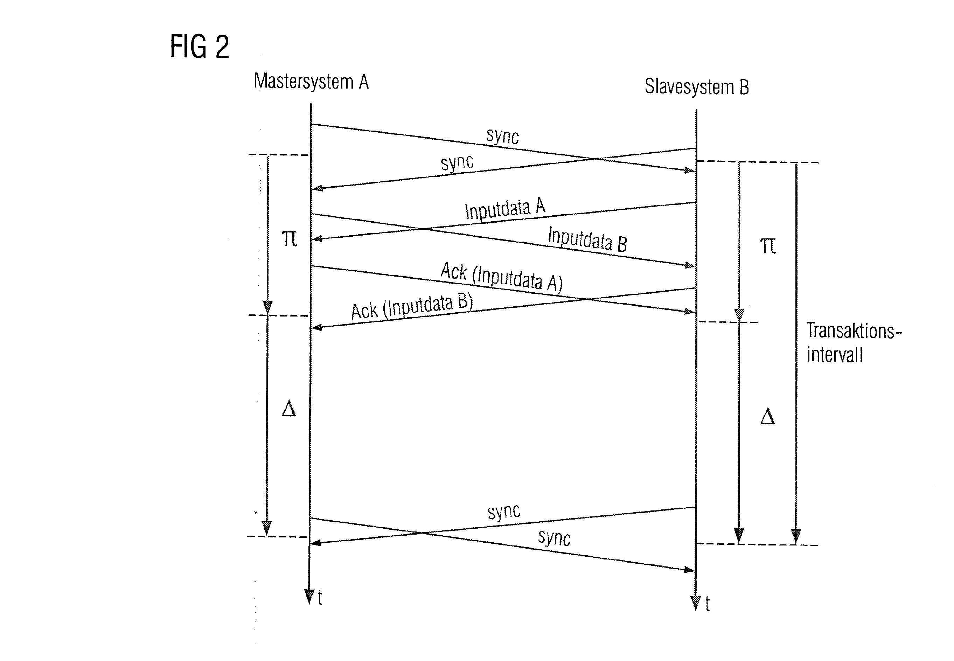

Die externe Inputsynchronisierung setzt eine physikalische Kopplung der beiden 2v2 Rechnersysteme und ein geeignetes Übertragungsprotokoll zur Datenübertragung voraus. Zur Übertragung kann beispielsweise eine serielle einkanalige Verbindung mit Übertragungssicherung - CRC - verwendet werden (Figur 1). Die Datenübertragung erfolgt zyklisch, transaktionsorientiert und im Quittungsbetrieb (Figur 2). Innerhalb eines Transaktionsintervalls πΔ werden die aktuellen relevanten Eingabedaten zwischen den 2v2 Rechnersystemen A und B übertragen. Damit liegen in den 2v2 Rechnersystemen sowohl die eigenen Eingabedaten, als auch die Eingabedaten des anderen 2v2 Rechnersystems vor. Mittels eines Übertragungsprotokolls werden folgende Informationen zwischen den 2v2 Rechnersystemen übertragen:
1. Informationen zum Synchronisieren der Phasenlage des Transaktionsintervalls πΔ,
2. Eingabedaten beider 2v2 Rechnersysteme in verfahrensgesicherter Übertragung,
3. Linkstatusübermittlung, d. h. Lebenszeichen und
4. optional: Informationen zum Aufsynchronisieren auf das Zustandsabbild des benachbarten 2v2 Rechnersystems bei Wiederanlauf eines ausgefallenen 2v2 Rechnersystems im laufenden Betrieb.

Abhängig von Art, Bedeutung und Wert der Eingabedaten erfolgt anschließend deren Abgleich in den 2v2 Rechnersystemen. Beispielsweise sind im Rahmen des Datenabgleichs folgende Datenvorverarbeitungsoperationen mit den übertragenen Daten möglich: Übernehmen, Verwerfen, Mittelwertbildung mit den eigenen Daten und Warten auf Änderung, wobei dazu eine vom Eingabedatum abhängige definierte Wartezeit von n Transaktionsintervallen vorgesehen werden kann. Im Ergebnis dieser Operationen liegen in beiden 2v2 Rechnersystemen identische vorverarbeitete Werte für die Eingabedaten vor.

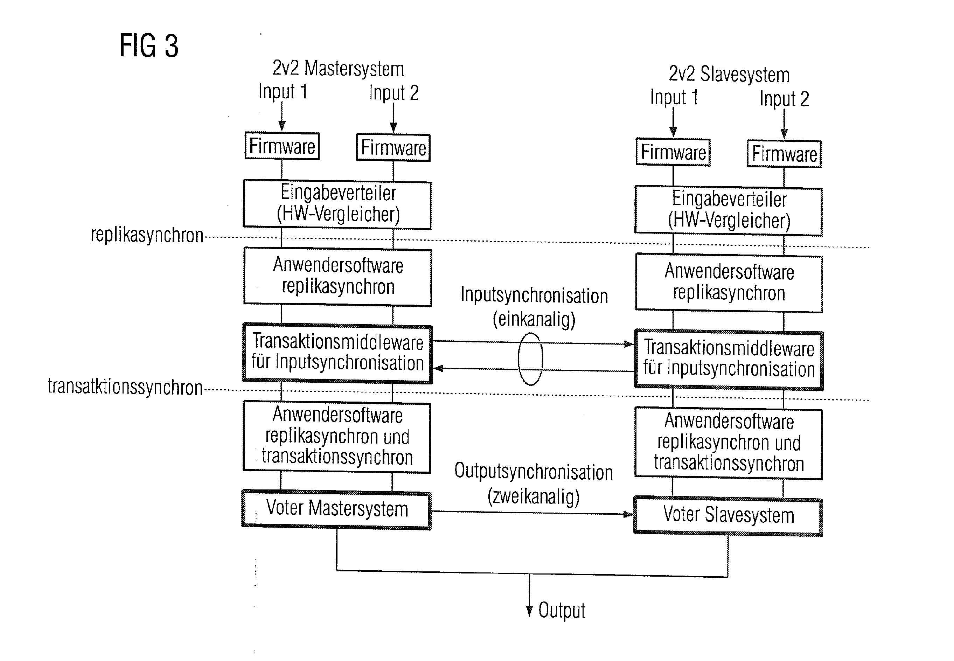

Die externe Inputsynchronisierung setzt die interne Synchronität der beiden Replika A1, A2, und B1, B2 des 2v2 Rechnersystems voraus, d. h. vor der externen transaktionsorientierten Synchronisierung zwischen den 2v2 Rechnersystemen muss die interne Synchronisierung der Eingabedaten innerhalb der 2v2 Rechnersysteme mittels der vorhandenen HW-Vergleicher und Voter bereits erfolgt sein. Die Funktionen zur externen Inputsynchronisierung setzen also auf einer replikasynchronen Verarbeitung auf. Nach Durchlaufen der externen Inputsynchronisierung liegt ein replikasynchroner und transaktionssynchroner Verarbeitungszustand gemäß Figur 3 vor.

Die im Rahmen der externen Inputsynchronisierung notwendigen Funktionen zur Datenübertragung und zum Datenabgleich zwischen den 2v2 Rechnersystemen können beispielsweise als Transaktionsmiddleware implementiert werden. Die Middleware kann replikaidentisch sein und softwaresynchron auf allen Replika als Teil der Betriebssystemfunktion eines 2v2 Rechnersystems ablaufen. Dadurch kann die Applikation von den Aufgaben der externen Inputsynchronisierung entlastet werden.

Die externe Inputsynchronisierung erzwingt eine zeitlich lose Kopplung zwischen den beiden 2v2 Rechnersystemen. Das Zeitverhalten der externen Inputsynchronisierung wird dabei durch das Transaktionsintervall πΔ bestimmt, welches wiederum von dem Kopplungsmedium und'den zu übertragenen Daten abhängt. Die mit dem Transaktionsintervall πΔ verbundene Wartezeit Δ für den Abgleich der Eingabedaten kann zu Problemen führen, wenn die Zeitanforderungen an die Verarbeitung von Eingabedaten sehr hoch sind. Um Performanceprobleme infolge der externen Inputsynchronisierung zur vermeiden, wird deswegen vorgeschlagen, im Applikationsdesign eine Aufteilung in replikasynchrone Applikationsfunktionen und in replika- und transaktionssynchrone Applikationsfunktionen vorzunehmen (Figur 3).

Replikasynchrone Applikationsfunktionen dienen der Vorverarbeitung von zeitkritischen Eingabedaten, bevor die externe Inputsynchronisierung durchgeführt wird. Da in dieser Phase keine Wartezeiten durch externe Inputsynchronisierung entstehen, können hier beliebige zeitkritische Vorverarbeitungsfunktionen, die noch keine direkte Ausgaben an den zu steuernden Prozess produzieren, ablaufen. Voraussetzung für diese Funktionen sind hardwaresynchronisierte übereinstimmende Informationen in beiden Replika des 2v2 Rechnersystems. Die Ereignisse der replikasynchronen Applikationsfunktionen können zwischen den 2v2 Rechnersystemen abweichen. Sie werden anschließend mittels externer Inputsynchronisierung zwischen den 2v2 Rechnersystemen abgeglichen. Beispielsweise kann eine Wegberechnung aus Einzelimpulsen einer Radumdrehung in der replikasynchronen Applikationsfunktion erfolgen. Mittels externer Inputsynchronisierung können anschließend die individuell in den 2v2 Rechnersystemen ermittelten Wege abgeglichen werden.

Nach der definierten Transaktionsintervalldauer für die externe Inputsynchronisierung stehen übereinstimmende Eingabedaten zwischen den 2v2 Rechnersystemen zur Verfügung. Auf diesen mit einer deterministischen Wartezeit verbundenen synchronisierten Informationen setzen die replika- und transaktionssynchronen Applikationsfunktionen auf und berechnen übereinstimmende Ergebnisse für beide 2v2 Rechnersysteme. Beispielsweise stehen nach der externen Inputsynchronisierung in beiden 2v2 Rechnersystemen die Mittelwerte der individuell berechneten Wege als weitere Berechnungsgrundlage zur Verfügung und werden nun für Ortungsfunktionen benutzt. Die auf der Basis übereinstimmender Eingabedaten identischen Ergebnisse in den 2v2 Rechnersystemen können nach Voting und Outputsynchronisierung an den zu steuernden Prozess ausgegeben werden.

Die Koordinierung der Aufgabe von Stellenergie an den zu steuernden Prozess erfordert eine Outputsynchronisierung, d. h. eine Synchronisierung der Voter beider 2v2 Rechnersysteme. Da beide 2v2 Rechnersysteme parallel laufen und beide 2v2 Rechnersysteme über die Ausgabeschnittstellen mit dem zu steuernden Prozess verbunden sind, ist eine sichere gegenseitige Verriegelung der Voter notwendig. Aufgabe der Outputsynchronisierung ist es deshalb, in Abhängigkeit des Zustandes des 2*2v2 Rechnerverbundes einen der beiden Voter für die Ausgabe der Stellenergie zu sperren. Die reguläre Aufgabe des Vorters im 2v2 System, in Abhängigkeit des Votingergebnisses zwischen den Replika die Ausgabe der Stellenergie zu steuern und bei Fehlern das System in den sicheren Zustand zu bringen, ist davon unberührt.

Zur Realisierung der Outputsynchronisierung sind folgende Maßnahmen notwendig:
1. Sicherheitstechnische Kopplung beider 2v2 Rechnersysteme. Für die Kopplung kann beispielsweise eine zweikanalige Leitung verwendet werden, über die das "Sperrbit" als zweikanaliges inverses Signal übertragen wird.
2. Fehlermeldungen, die durch fehlerhafte externe Inputsynchronisierung , z. B. Übertragungsfehler, verursacht werden, müssen an den Voter übermittelt werden, da die Verrieglungslogik auch Fehler aus der externen Inputsynchronisierung berücksichtigen muss.
3. Die Voter beider 2v2 Rechnersysteme müssen bezüglich ihrer Schaltlogik erweitert werden. Die Erweiterungen fallen in den beiden 2v2 Rechnersystemen unterschiedlich aus. Mit der Votererweiterung wird ein 2v2 Rechnersystem zum Mastersystem, während das andere zum Slavesystem wird.

Der Voter des Mastersystems steuert über die sichere Kopplung den Voter des Slavesystems. Die Freigabe der Stellenergie durch den Voter des Slavesystems hängt somit von der Erfüllung zweier Bedingungen ab:
1. Der Replikavergleich im Slavesystem muss gültig sein - interne Freigabe - und
2. der Voter im Slavesystem muss vom Voter des Mastersystems entsperrt worden sein - externe Freigabe.
Der Voter des Slavesystems kann den Voter des Mastersystems dagegen nicht beeinflussen.

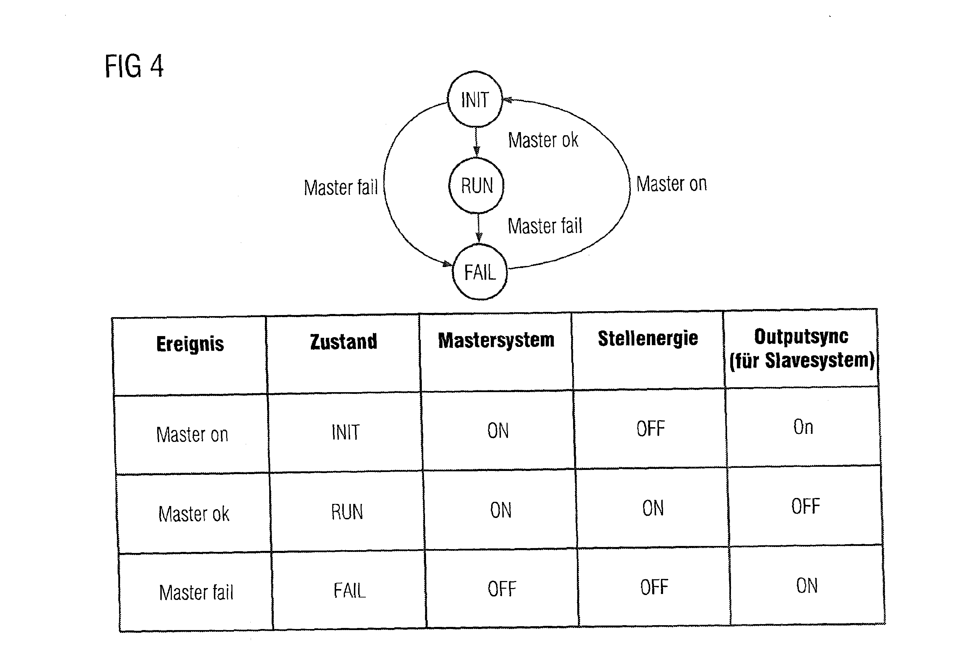

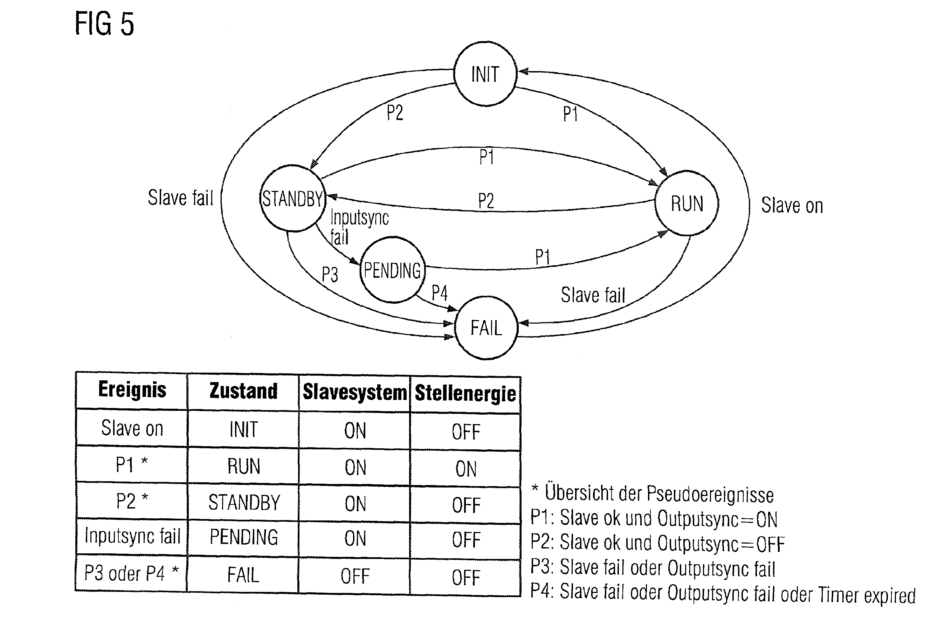

Im fehlerfreien Fall, d. h. Master- und Slavesystem sowie Input- und externe Outputsynchronisierung sind nicht ausgefallen, erfolgt die Ausgabe der Stellenergie durch das Mastersystem. Das Slavesystem arbeitet im Hot-Standby-Modus parallel redundant. Dessen Voter bewertet die Ergebnisse der Replika im Slavesystem, ist aber für die Ausgabe der Stellenergie durch das Mastersystem gesperrt. Eine Umschaltung zwischen den Votern beider Systeme wird in Abhängigkeit des Fehler- und Ausfallzustandes im 2*2v2 Rechnerverbund gesteuert. Die Steuerung erfolgt mit Hilfe von individuellen Zustandsmodellen für die Voter des Master- und Slavesystems gemäß Figur 4 und 5. Die Zustandslogik für die Voter des Master- und Slavesystems muss in die bestehende Voterlogik integriert werden, so dass deren Funktionalität dadurch zunimmt und individualisiert wird. Da die Voter meistens aus programmierbarer Hardware aufgebaut sind, wird die Implementierung eines zusätzlichen Zustandsautomaten mit 3 bzw. 5 Zuständen normalerweise ohne zusätzlichen Hardwareaufwand möglich sein.

Folgendes Ausfallverhalten des 2*2v2 Rechnerverbundes wird durch die Voter gesteuert:
a) Fehler im Mastersystem (Figur 4)
   Tritt im Mastersystem ein Fehler auf, dann wird dieser durch den Voter des Mastersystems offenbart. Der Voter des Mastersystems bewirkt folgende Fehlerreaktionen:
   1. Sperrung des Voters des Mastersystems für Stellenergieausgabe,
   2. Entsperren des Voters des Slavesystems - externe Entsperrung- und
   3. Abschalten des Mastersystems.
      Im Slavesystem kommt es infolge des Ausfalls des Mastersystems zum Ausfall der externen Inputsynchronisierung und der Outputsynchronisierung. Dieses wird vom Slavesystem ignoriert, sofern der Voter des Slavesystems bereits extern entsperrt wurde. Wenn das Slavesystem zu diesem Zeitpunkt fehlerfrei arbeitet, wird ab diesem Zeitpunkt die Ausgabe der Stellenergie an den zu steuernden Prozess durch den Voter des Slavesystems erfolgen.
      Beim Wiederanlauf des Mastersystems während des laufenden Betriebes, z. B. nach Instandsetzung, darf die Übernahme der Ausgabesteuerung für die Stellenergie erst dann auf das Mastersystem umgeschaltet werden, wenn der Zustandsabgleich zwischen Master- und Slavesystem mittels externer Inputsynchronisierung vollständig durchgeführt wurde.
b) Fehler im Slavesystem (Figur 5)
   Tritt im Slavesystem ein Fehler auf, dann wird dieser durch den Voter des Slavesystems offenbart. Der Voter des Slavesystems bewirkt folgende Fehlerreaktionen:
   1. Sperrung des Voters des Slavesystems für Stellenergieausgaben - interne Sperrung - und
2.Abschalten des Slavesytems.
   Im Mastersystem kommt es infolge des Ausfalls des Slavesystems zum Ausfall der externen Inputsynchronisierung. Dieser Fehler wird vom Mastersystem ignoriert. Sofern das Mastersystem zu diesem Zeitpunkt intakt ist, setzt dieses die Ausgabe der Stellenergie fort. Ist das Mastersystem bereits ausgefallen, führt die Abschaltung des Slavesystems zum Ausfall des 2*2v2 Rechnerverbundes.
   Beim Wiederanlauf des Slavesystems während des laufenden Betriebes, z. B. nach Instandsetzung, darf die externe Entsperrung des Voters des Slavesystems erst dann erfolgen, wenn der Zustandsabgleich zwischen Master- und Slavesystem mittels externer Inputsynchronisierung vollständig durchgeführt wurde.
c) Fehler in der Inputsynchronisierung
   Tritt ein Fehler in der externen Inputsynchronisierung auf, ist die externe Synchronität zwischen Master- und Slavesystem nicht mehr sichergestellt. Demzufolge darf in diesem Fall die Umschaltung der Ausgabe zwischen Master- und Slavesystem höchstens noch innerhalb der nächsten Transaktionsintervalldauer durchgeführt werden und danach nicht mehr. Fehler in der externen Inputsynchronisierung können verschiedene Ursachen haben. Möglich sind einerseits Fehler im Master- oder Slavesystem. Diese führen zu Fehlerreaktionen gemäß a) oder b). Andererseits gibt es Fehlerursachen in der Datenübertragung zwischen Master- und Slavesystem, z. B. Datenfehler, Zeitfehler, Protokollfehler, Kabeldefekt, die zu Fehlermeldungen führen können. Da in diesen Fällen das Master- und Slavesystem intakt ist und die Stellenergieausgabe somit durch das Mastersystem erfolgt, treten folgende individuelle Fehlerreaktionen ein:
   Im Mastersystem wird die Fehlermeldung ignoriert und die Stellenergieausgabe fortgesetzt. Der Voter des Slavesystems bleibt extern gesperrt.

   Da im Slavesystem die Ausfallzustände a) und c) nicht in jedem Fall sofort eindeutig differenzierbar sind, insbesondere wegen undefinierter zeitlicher Reihenfolge der Fehlermeldung der externen Inputsynchronisierung und der externen Entsperrung des Voters des Slavesystems durch das Mastersystem, muss nach einer Fehlermeldung aus der externen Inputsynchronisierung im Slavesystem eine definierte Zeit von höchstens einer Transaktionsintervalldauer πΔ auf eine vom Mastersystem ausgeführte externe Entsperrung des Voters gewartet werden. Erfolgt die externe Entsperrung des Voters im Slavesystem, dann liegt ein Ausfall des Mastersystems vor und es tritt eine Fehlerreaktion gemäß a) ein. Andernfalls liegt ein Fehler gemäß c) vor, der im Slavesystem zu Fehlerreaktionen gemäß b) führt.
d) Fehler in der Outputsynchronisierung
   Die gegenseitige Verriegelung der Voterlogik hat Sicherheitsverantwortung. Fehler in der Outputsynchronisierung müssen deshalb offenbart werden und zu einem sicheren Systemzustand führen, d. h. eine gleichzeitige Ausgabe von Stellenergie durch das Master- und Slavesystem muss verhindert werden. Die Voter des Master- und Slavesystems sind aus eigensicherer Hardware aufgebaut, die bei Fehlern einen Sperrzustand einnimmt. Bei Fehlern im Voter des Mastersystems erfolgt die Fehlerreaktion gemäß a). Bei Fehlern im Voter des Slavesystems erfolgt die Fehlerreaktion gemäß b). Fehler in der Datenüberragung zwischen den intakten Votern des Master- und Slavesystems müssen vom Voter des Slavesystems offenbart werden. Übertragungsfehler können sowohl durch fehlerhaft übertragene Daten, z. B. durch äußere Störeinflüsse, als auch durch Ausfall der Datenübertragung, z. B. durch Kabeldefekt, verursacht werden. Sofern der Voter des Slavesystems zum Zeitpunkt des Übertragungsfehlers durch das Mastersystem extern entsperrt war, werden Fehler in der Outputsynchronisation vom Slavesystem ignoriert. Ist der Voter des Slavesystems vom Mastersystem zum Zeitpunkt der Fehlermeldung extern gesperrt, erfolgt die Fehlerreaktion im Slavesystem gemäß b).

Die Figuren 4 und 5 verdeutlichen das differenzierte Verhalten des Master- und Slavesystems anhand von individuellen Zustandsmodellen.

## Patentansprüche

1. Rechneranordnung mit einem eigensicheren, als Mastersystem
(A) konfigurierten 2v2 Rechnersystem und einem weiteren eigensicheren, mit dem Mastersystem (A) gekoppelten, als Slavesystem (B) konfigurierten, 2v2 Rechnersystem,
**dadurch gekennzeichnet,**
**dass** zwischen Master- und Slavesystem (A und B) eine erste Verbindung zwecks Synchronisierung der Eingabedaten vorgesehen ist, mittels der durch transaktionsorientierte Datenübertragung die Übereinstimmung der Ausgaben beider parallel arbeitender 2v2 Rechnersysteme sicherstellbar ist - Inputsynchronisierung - und dass eine zweite Verbindung zwecks Synchronisierung der Ausgabedaten vorgesehen ist, mittels der das Mastersystem (A) die Ausgaben des Slavesystems (B) in sicherer Art und Weise abschalten kann - Outputsynchronisierung.

2. Rechneranordnung nach Anspruch 1,
**dadurch gekennzeichnet,**
**dass** als Übertragungsmedien für die Kopplungen zwischen Master- und Slavesystem (A und B) verschiedene Punkt-zu-Punkt-, als auch Busübertragungssysteme einsetzbar sind.

3. Rechneranordnung nach einem der vorangehenden Ansprüche,
**dadurch gekennzeichnet,**
**dass** für die Synchronisierung der Eingabedaten ein transaktionsorientiertes Übertragungsprotokoll verwendet wird, welches innerhalb eines Transaktionsintervalls (πΔ) zyklisch und datenspezifisch den Datenabgleich übernimmt und als softwaresynchrone Middleware auf den Replika (A1, A2; B1, B2) des Masterund Slavesystems (A und B) implementiert ist.

4. Rechneranordnung nach einem der vorangehenden Ansprüche,
**dadurch gekennzeichnet,**
**dass** die Voter des Master- und Slavesystems (A und B) die wechselseitige Sperrung der Stellenenergieausgabe übernehmen.

5. Rechneranordnung nach einem der vorangehenden Ansprüche,
**dadurch gekennzeichnet,**
**dass** durch individuell unterschiedliche Erweiterungen in der Logik der Voter der 2v2 Rechnersysteme ein 2v2 Rechnersystem zum Mastersystem (A) und das andere 2v2 Rechnersystem zum Slavesystem (B) konfigurierbar ist.

6. Rechneranordnung nach einem der vorangehenden Ansprüche,
**dadurch gekennzeichnet,**
**dass** die Replika (A1, A2; B1, B2) des Master- und Slavesystems (A, B) identisch sind.

7. Rechneranordnung nach einem der vorangehenden Ansprüche,
**dadurch gekennzeichnet,**
**dass** der aus dem Master- und Slavesystem (A und B) gebildete 2*2v2 Rechnerverbund auch dann noch funktionsfähig und eigensicher ist, wenn Master- oder Slavesystem (A oder B) oder Inputsynchronisierung oder Outputsynchronisierung ausgefallen ist.

8. Rechneranordnung nach einem der vorangehenden Ansprüche,
**dadurch gekennzeichnet,**
**dass** der Wiederanlauf von Master- oder Slavesystem (A oder B) im 2*2v2 Rechnerverbund während des laufenden Betriebes möglich ist.
